Europäisches Patentamt

European Patent Office

Office européen des brevets

(19)

(11) Veröffentlichungsnummer: **0 044 020**
**A1**

(12) # EUROPÄISCHE PATENTANMELDUNG

(21) Anmeldenummer: **81105266.1**

(22) Anmeldetag: **07.07.81**

(51) Int. Cl.³: **G 02 B 5/16**

(30) Priorität: **14.07.80 DE 3026631**

(43) Veröffentlichungstag der Anmeldung:
**20.01.82 Patentblatt 82/3**

(84) Benannte Vertragsstaaten:
**AT BE CH FR GB LI NL SE**

(71) Anmelder: **SIEMENS AKTIENGESELLSCHAFT Berlin
und München
Postfach 22 02 61
D-8000 München 22(DE)**

(72) Erfinder: **Saatze, Kuno, Dipl.-Ing.
Wulfingstrasse 19
D-8080 Emmering(DE)**

(54) **Übergangsstück zum Überführen einer zirkularen Adernanordnung eines Kabels oder dgl. in eine lineare Adernanordnung oder umgekehrt.**

(57) Das Übergangsstück besteht aus einem Formteil mit räumlich verlaufenden Kanälen für die einzelnen Adern, wobei an der einen Stirnseite des Formteiles die Kanaleingänge dem Kabelaufbau entsprechend zirkular und an der anderen Stirnseite des Formteiles die Kabelausgänge entsprechend der gewünschten linearen Adernanordnung angeordnet sind

FIG 8

EP 0 044 020 A1

SIEMENS AKTIENGESELLSCHAFT
Berlin und München

Unser Zeichen
VPA
80 P 7 1 0 6 E

Übergangsstück zum Überführen einer zirkularen
Adernanordnung eines Kabels oder dgl. in eine
lineare Adernanordnung und umgekehrt

Die Erfindung betrifft ein Übergangsstück zum Überführen
einer zirkularen Adernanordnung eines mehradrigen Kabels
oder dgl. in eine lineare Adernanordnung und umgekehrt,
insbesondere eines Lichtwellenleiter-Kabels.

Beim Verbinden von mehradrigen Kabeln, insbesondere bei
Lichtwellenleiter-Kabeln, müssen zirkulare Adernanordnungen meist in lineare Anordnungen übergeführt werden,
da die erforderlichen Arbeitsgänge zum Verbinden und
Kontaktieren der einzelnen Lichtwellenleiter meist in
linearer Anordnung durchgeführt werden. Bisher wurde
das Problem dadurch gelöst, daß das abgesetzte und aufgeteilte Grundbündel in ein entsprechend profiliertes
Blechteil eingesetzt wird, wobei die einzelnen Adern in
Nuten des Blechteiles eingelegt und mit Hilfe eines weiteren Blechteiles durch Schrauben festgeklemmt werden.
Das aus mehreren Blechteilen bestehende Übergangsstück
ist relativ kompliziert und aufwendig herzustellen und
erfordert bei der Montage der Lichtwellenleiter erhöhte
Aufmerksamkeit, damit die richtige Zählrichtung und
-folge der einzelnen Adern in der zirkularen und linearen Anordnung übereinstimmen. Eine Vertauschung einzelner Adern führt zwangsläufig zu fehlerhaften Schaltungen.

Der Erfindung liegt die Aufgabe zugrunde, ein einfaches
und billiges Übergangsstück zu schaffen, das einfach zu
handhaben ist und bei dem die Gefahr einer Vertauschung
einzelner Adern praktisch ausgeschlossen ist. Das Über-

Hs 1 Dxl/10.7.1980

gangsstück gemäß der Erfindung ist dadurch gekennzeichnet, daß ein Formteil mit räumlich verlaufenden Kanälen für die einzelnen Adern verwendet ist, wobei an der einen Stirnseite des Formteiles die Kanaleingänge für die Adern dem Kabelaufbau entsprechend zirkular und an der anderen Stirnseite des Formteiles die Kabelausgänge entsprechend der gewünschten linearen Adernanordnung angeordnet sind. Die einzelnen Adern brauchen dann nurmehr in die Kanäle eingeschoben zu werden, lassen sich also einfachst montieren. Durch die räumlich verlaufenden Kanäle ist eine Vertauschung einzelner Adern praktisch ausgeschlossen.

Vorzugsweise sind die Kanäle für die einzelnen Adern an den Kanaleingängen und an den Kanalausgängen im Formteil zueinander parallel angeordnet. Auf diese Weise kann verhindert werden, daß unzulässige Biegebeanspruchungen der Adern am zukünftigen Verwendungsort entstehen, was insbesondere bei den sehr empfindlichen Lichtwellenleitern von erheblicher Bedeutung ist.

Vorzugsweise ist das Formteil ein zylindrischer Körper, an dessen Stirnseite die Kabelein- und -ausgänge vorgesehen sind. Diese Form ist besonders einfach und zweckmäßig. Im Bedarfsfalle kann jedoch die äußere Form des Formteiles den jeweiligen Gegebenheiten leicht angepaßt werden.

Das Übergangsstück wird gemäß der Erfindung in einfacher Anweisung durch Gießen oder Spritzen hergestellt. Als Gießmasse können ansich bekannte kalt oder warm verarbeitbare Materialien verwendet werden, z.B. auch Thermoplaste.

Ein besonders einfaches Herstellungsverfahren ergibt sich dadurch, daß ein hohlzylindrische Gießform verwendet wird, die an beiden Stirnflächen durch scheiben-

0044020

förmige Teile abgeschlossen ist, in welche den Aderanordnungen entsprechende Durchbrüche für die Kerne zur Abformung der Kanäle vorgesehen sind.

Gemäß einer Weiterbildung der Erfindung sind Stäbe oder Rohre mit sich verjüngenden Querschnitten verwendet, um größere Eintritts- und kleinere Austrittsöffnungen der Kanäle zu erhalten.

Anhand der Zeichnung, in der mehrere Ausführungsbeispiele dargestellt sind, wird die Erfindung näher erläutert

Es zeigen:

Figur 1   ein zylindrisches Formteil,

Figur 2   eine stirnseitige Ansicht von links auf das zylindrische Formteil gemäß Figur 1 mit Kanaleingängen

Figur 3   eine stirnseitige Ansicht von rechts auf das zylindrische Formteil gemäß Figur 1 mit Kanalausgängen

Figur 4   eine Gießform zum Gießen des in Figur 1 - 3 dargestellten zylindrischen Formteiles

Figur 5   ein anderes zylindrisches Formteil

Figur 6   eine stirnseitige Ansicht von links auf das zylindrische Formteil gemäß Figur 5 mit Kanaleingängen,.

Figur 7   eine stirnseitige Ansicht auf das zylindrische Formteil gemäß Figur 5 mit Kanalausgängen

Figur 8    eine Gießform zum Gießen des in Figur 5 - 7
           dargestellten zylindrischen Formteiles

Figur 9    ein zylindrisches Formteil mit eingelegten
           Röhrchen

Figur 10   eine stirnseitige Ansicht von links auf das
           zylindrische Formteil gemäß Figur 9,

Figur 11   eine stirnseitige Ansicht von rechts auf das
           zylindrische Formteil gemäß Figur 9,

Figur 12   eine Gießform zur Herstellung des zylindrischen
           Formteiles gemäß Figur 9 - 11 und

Figur 13   einen Linear- Zirkular- Übergang mit Hilfe von
           parallel verlaufenden Röhrchen

Mit 11 ist ein zylindrisches Formteil bezeichnet, wobei mit strichpunktierten Linien die Mittelpunkte der mit 1 - 8 bezeichneten Kanäle angedeutet sind. Eine Stirnfläche 12 des zylindrischen Formteiles 11 weist eine zirkulare Anordnung der Eingänge der Kanläle 1 - 8 auf, während eine Stirnfläche 13 eine lineare Anordnung der Ausgänge der Kanäle 1 - 8 aufweist. Die Ausgänge der Kanäle 1 - 8 sind in zwei Reihen und gegeneinander versetzt angeordnet. Eine Mittelbohrung 14 dient im Bedarfsfalle für ein zentrales Zugentlastungselement.

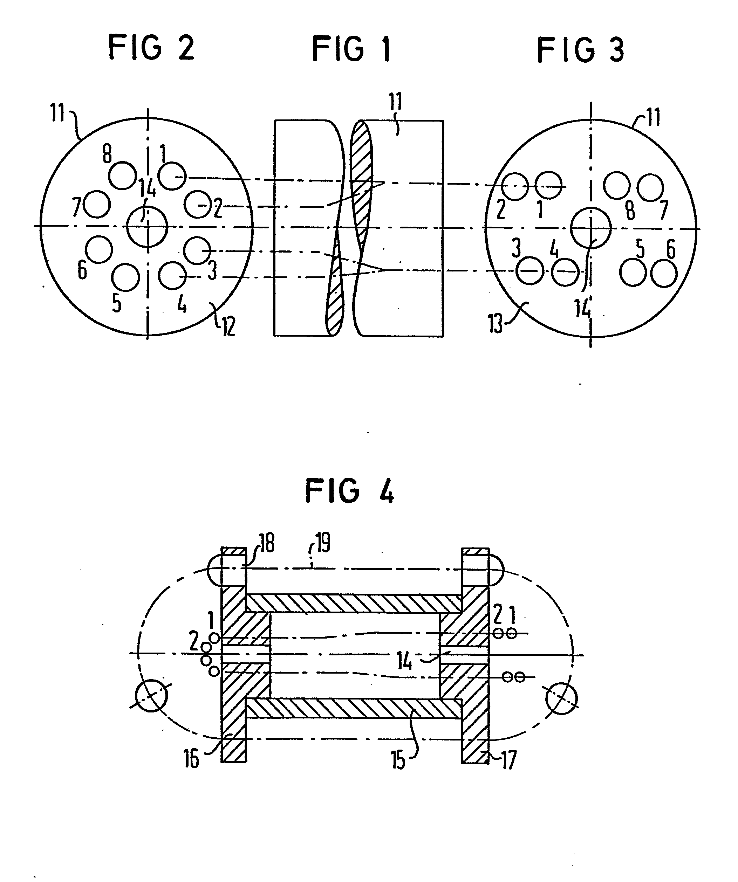

Figur 4 zeigt eine Gießform zur Herstellung des in Figur 1 - 3 dargestellten Formteiles. Mit 15 ist eine hohlzylindrische Gießform bezeichnet, deren Innendurchmesser dem Außendurchmesser des zylindrischen Formteiles entspricht. Die hohlzylindrische Gießform ist an beiden Stirnseiten mit scheibenförmigen Teilen 16 und 17 abgeschlossen. Die Flansche der scheibenförmigen Teile 16 und 17 sind mit Bohrungen 18 für Zugschrauben zum Zusammenhalten der Gießform versehen, wie mit strichpunktierten Linien 19 angedeutet ist. Die scheibenförmigen Teile 16 und 17 weisen den Stirnflächen 12 und 13 gemäß Figur 2 und 3 entsprechend angeordnete Bohrungen auf, durch die beispielsweise ein Perlon- oder Federstahldraht durchgezogen werden kann, die dann die Kerne für die Abformung der einzelnen Kanäle bilden. Die Außenseite dieser Drähte ist zweckmäßig mit einem Trennmittel versehen, um sie nach dem Ausfüllen der Gießform mit der Gießmasse herausziehen zu können, damit die Kanäle 1 - 8 gemäß Figur 1 - 3 entstehen. An Stelle von Drähten können auch entsprechende Röhrchen aus Kunststoff verwendet werden, die aber dann in der Gießform verbleiben können. In die auf diese Weise gebildeten Kanäle werden dann die einzelnen Adern des Kabels eingeschoben, und zwar in der richtigen Reihenfolge entsprechend der Numerierung 1 - 8.

Zu Figur 4 wird nochmals bemerkt, daß die drahtförmigen Kerne lediglich in den scheibenförmigen Teilen 16 und 17 geführt sind, sich dann aber über die hohlzylindrische Gießform 15 freiverlaufend erstrecken. In Figur 4 sind der Übersichthalber Einguß und Steiger nicht gezeichnet.

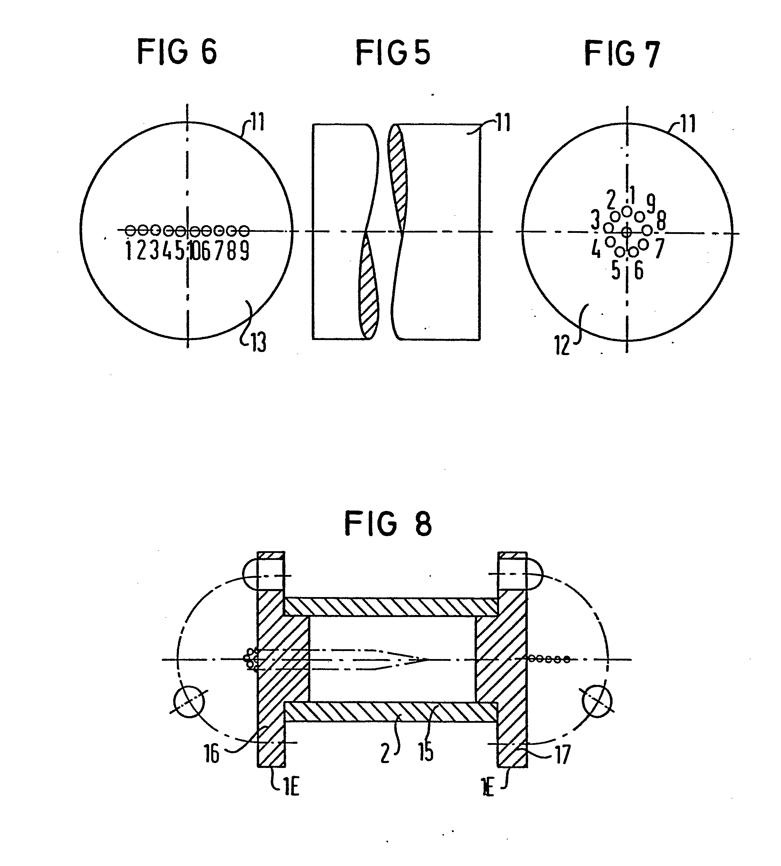

Figur 5 zeigt ein zylindrisches Formteil 11 mit anderer Anordnung der Kanalein- bzw. -ausgänge. Figur 6 und 7 zeigen die Anordnung der Ein- und Ausgänge der Kanäle 1 - 10. Wie insbesondere Figur 7 zeigt, ist auch im Zentrum des zylindrischen Formteiles 11 ein Kanal 10 vorgesehen. Figur 8 zeigt die entsprechende Gießform zur Herstellung des zylindrischen Formteiles 11 gemäß Figur 5 - 7, wobei gleiche Teile mit gleichen Bezugsziffern wie zuvor versehen sind.

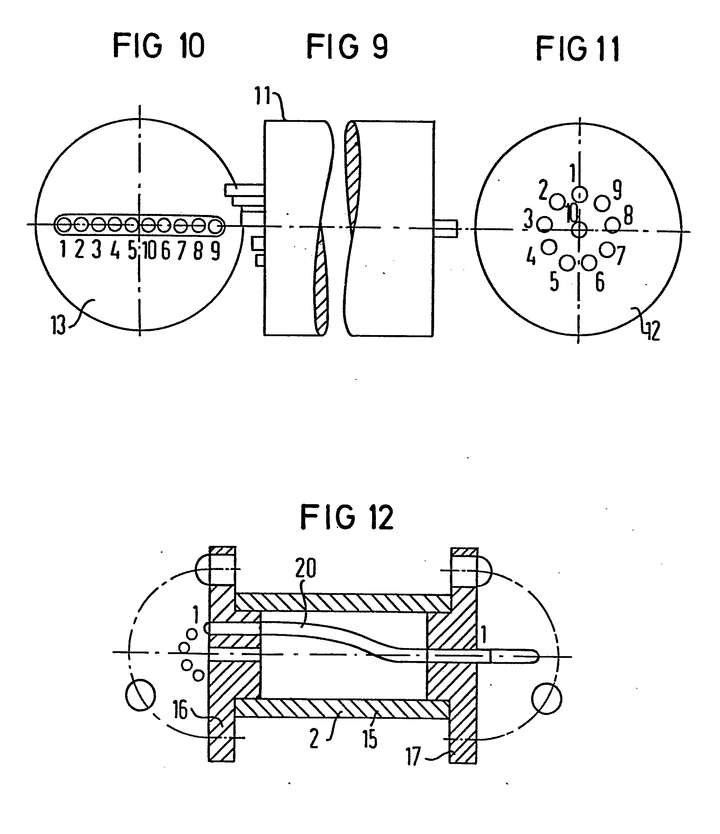

In Figur 9 - 11 ist ein zylindrisches Formteil 11 dargestellt, bei dem der Verlauf der Kanäle 1 - 10 ähnlich ist, wie bei dem Ausführungsbeispiel nach Figur 5 - 7. Jedoch sind hier die Bohrungen für die Kanäle 1 - 10 mit Röhrchen versehen. Figur 12 zeigt die entsprechende Gießform, wobei in die entsprechenden Bohrungen der scheibenförmigen Teile 16 und 17 Isolierschläuche 20 zur Herstellung der Kanäle eingefügt sind. Diese Isolierschläuche verbleiben nach dem Ausfüllen der Gießform 15 in dem Formteil.

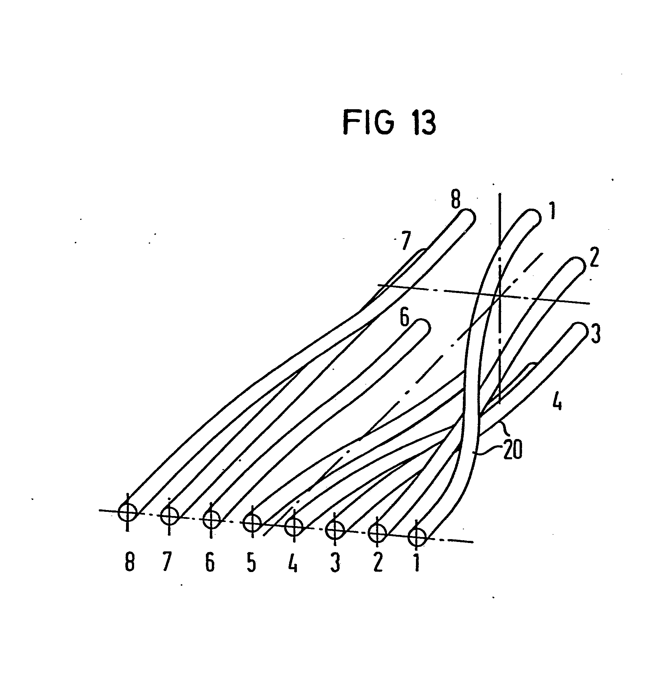

Figur 13 zeigt eine räumliche Darstellung des Verlaufes der Kanäle 1 - 8 bei Übergang von einer zirkularen Adernanordnung in eine lineare Adernanordnung. Werden beispielsweise bei dem Ausführungsbeispiel nach Figur 13 für die Kanäle Röhrchen (20) verwendet, die über eine Folie miteinander verbunden sind, so kann das Übergangsstück so gebildet werden, daß die in einer Ebene liegenden Röhrchen 1 - 8 am rückwertigen Ende zu einer runden Anordnung zusammengedreht werden, wie beispielsweise Figur 13 zeigt.

11 Patentansprüche
13 Figuren

Patentansprüche

1. Übergangsstück zum Überführen einer zirkularen Adernanordnung eines mehradrigen Kabels oder dgl. in eine lineare Adernanordnung und umgekehrt, insbesondere eines Lichtwellenleiter-Kabels, d a d u r c h   g e k e n n - z e i c h n e t ,   daß ein Formteil (11) mit räumlich verlaufenden Kanälen (1-8, 1-10) für die einzelnen Adern verwendet ist, wobei an der einen Stirnseite (12) des Formteiles (11) die Kanaleingänge für die Adern dem Kabelaufbau entsprechend zirkular und an der anderen Stirnseite (13) die Kabelausgänge entsprechend der gewünschten linearen Adernanordnung angeordnet sind.

2. Übergangsstück nach Anspruch 1, d a d u r c h   g e - k e n n z e i c h n e t ,   daß die Kanäle (1-8, 1-10) für die einzelnen Adern an den Kanaleingängen und an den Kanalausgängen im Formteil (11) zueinander parallel angeordnet sind.

3. Übergangsstück nach Anspruch 1 oder 2, d a d u r c h   g e k e n n z e i c h n e t ,   daß das Formteil (11) ein zylindrischer Körper ist, an dessen Stirnseite die Kabelein- und -ausgänge vorgesehen sind.

4. Verfahren zum Herstellen des Übergangsstückes nach einem der Ansprüche 1 - 3, d a d u r c h   g e k e n n - z e i c h n e t ,   daß das Formteil (11) durch Gießen oder Spritzen hergestellt ist.

5. Verfahren nach Anspruch 4, d a d u r c h   g e - k e n n z e i c h n e t ,   daß eine hohlzylindrische Gießform (15) verwendet wird, die an beiden Stirnflächen durch scheibenförmige Teile (16,17) abgeschlossen ist, in welche den Adernanordnungen entsprechende Durchbrüche für die Kerne zur Abformung der Kanäle (1-8, 1-10) vorgesehen sind.

6. Verfahren nach Anspruch 5, d a d u r c h  g e -
k e n n z e i c h n e t , daß die Kerne für die Abformung der Kanäle (1-8, 1-10) durch elastische Verformung von runden Stäben oder Rohren in der Gießform gebildet sind.

7. Verfahren nach Anspruch 6, d a d u r c h  g e -
k e n n z e i c h n e t , daß als Kernmaterial Perlondraht mit einem Trennmittel verwendet ist.

8. Verfahren nach Anspruch 6, d a d u r c h  g e -
k e n n z e i c h n e t , daß als Kernmaterial Federstahldraht mit einem Trennmittel verwendet ist.

9. Verfahren nach Anspruch 6, d a d u r c h  g e -
k e n n z e i c h n e t , daß als Kernmaterial Isolierschläuche (20) verwendet sind, die im Formteil (15)
verbleiben.

10. Verfahren nach Anspruch 6, d a d u r c h  g e -
k e n n z e i c h n e t , daß Stäbe oder Rohre mit
sich verjüngenden Querschnitten verwendet sind, um
größere Eintritts- und kleinere Austrittsöffnungen der
Kanäle zu erhalten.

11. Verfahren zum Herstellen des Übergangsstückes nach
Anspruch 1, d a d u r c h  g e k e n n z e i c h n e t ,
daß als Formstück Folienabschnitte mit parallel verlaufenden Kanälen (20) verwendet sind, die einseitig zu runden Anordnungen zusammengedreht werden.

1/4

FIG 2          FIG 1          FIG 3

FIG 4

FIG 6

FIG 5

FIG 7

FIG 8

FIG 10          FIG 9          FIG 11

FIG 12

FIG 13

**Europäisches Patentamt**

**EUROPÄISCHER RECHERCHENBERICHT**

EP 81 10 5266.1

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | GB - A - 1 412 771 (MARCONI CO.LTD.)<br>* Fig. 2 *<br>--- | 1,2 | G 02 B 5/16 |
| | GB - A - 2 027 928 (MAX-PLANCK GESELL-<br>SCHAFT)<br>* Fig. *<br>--- | 1 | |
| | DE - A - 2 233 853 (BRAUN AG)<br>* Seite 4 *<br>--- | 4,5 | |
| A | GB - A - 1 218 107 (DECITRON ELECTRONICS<br>CORP.)<br>* Fig. 5, 6 *<br>--- | | RECHERCHIERTE SACHGEBIETE (Int. Cl.³)<br><br>G 02 B 5/16 |
| A | GB - A - 1 384 567 (SOVAL LTD.)<br>* Fig. 3, 4 *<br>----- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Berlin | Abschlußdatum der Recherche<br>13-10-1981 | Prüfer<br>FUCHS |
|---|---|---|

EPA form 1503.1  06.78